# EUROPÄISCHE PATENTSCHRIFT

(11) **EP 1 201 015 B1**
(45) Veröffentlichungstag und Bekanntmachung des Hinweises auf die Patenterteilung: **20.12.2006**
(21) Anmeldenummer: 00958129.9
(22) Anmeldetag: 17.07.2000
(51) Int. Cl.: H02H 3/33

(54) **FEHLERSTROM-SCHUTZEINRICHTUNG**
PROTECTIVE DEVICE AGAINST FAULT CURRENTS
DISPOSITIF DE PROTECTION CONTRE LES COURANTS DE DEFAUT

(30) Priorität: 05.08.1999 DE 19937061
(43) Veröffentlichungstag der Anmeldung: 02.05.2002
(73) Patentinhaber: SIEMENS AKTIENGESELLSCHAFT, 80333 München (DE)
(72) Erfinder: LEHNER, Gerald, D-93083 Obertraubling (DE); HUBER, Markus, D-93083 Obertraubling (DE)
(86) Internationale Anmeldenummer: PCT/DE2000/002305
(87) Internationale Veröffentlichungsnummer: WO 2001/011745

(56) Entgegenhaltungen:
- EP-A- 0 855 779
- DE-A- 3 543 985
- SOLLEDER: "Warum Fehlerstrom-Schutzschalter mit netzspannungsunabhängiger Auslösung?" ELEKTROTECHNISCHE ZEITSCHRIFT - ETZ., Bd. 107, Nr. 20, Oktober 1986 (1986-10), Seiten 938-945, XP002153372 VDE VERLAG GMBH. BERLIN., DE ISSN: 0948-7387 in der Anmeldung erwähnt

## Beschreibung

Die Erfindung bezieht sich auf eine Fehlerstrom-Schutzeinrichtung gemäß dem Oberbegriff des Ansprüchs 1 mit einem Summenstromwandler sowie mit in einem Auslösekreis einer Auslöseschaltung und einem Auslöserelais zur Betätigung einer ein Leiternetz schaltenden Schaltmechanik. Als Auslösekreis wird ein Stromkreis bezeichnet, entlang dessen eine elektrische Kontrollgröße erzeugt und diese bewertet wird, und der ein elektrisches Auslösesignal erzeugt, das bei Vorliegen einer Auslösebedingung ein Auslöserelais aktiviert, d.h. zur Auslösung bringt.

Eine derartige, z.B. aus der DE 3 543 985 A1 bekanntet Fehlerstrom-Schutzeinrichtung dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehlerstrom (oder auch Differenzstrom) fließt dann über die. Person als Körperstrom gegen Erde ab. Die zum Schutz gegen gefährliche Körperströme eingesetzte Schutzeinrichtung trennt bei Überschreiten des sogenannten Auslösefehlerstroms den betroffenen Stromkreis sicher und schnell vom Netz.

Der Aufbau bekannter Fehlerstrom-Schutzeinrichtungen ist beispielsweise aus der "etz" (1986), Heft 20, Seiten 938 bis 945, bekannt. Dort sind in den Bildern 1 bis 3 Prinzipschaltbilder und Funktionsprinzipien eines netzspannungsunabhängigen Fehlerstrom-Schutzschalters (FI-Schutzschalter) und eines netzspannungsabhängigen Differenzstrom-Schutzschalters (DI-Sehutzschalter) dargestellt. Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Fall eines Fehlerstroms ein Spannungssignal induziert, das ein über eine Auslösekreiselektronik oder Auslöseschaltung mit der Sekundärwicklung verbundenes Auslöserelais ansteuert. Das Auslöserelais betätigt daraufhin eine Schaltmechanik, mittels derer die Leiter des Leiternetzes getrennt werden. Dabei ist die Auslöseschaltung des FI-Schutzschalters ausschließlich induktiv über den Summenstromwandler an das Leiternetz gekoppelt. Er entnimmt somit die zur Auslösung notwendige Energie netzspannungsunabhängig aus dem Fehlerstrom selbst. Dagegen erfolgt beim DI-Schutzschalter die Auslösung netzspannungsabhängig mittels einer Verstärkerschaltung, die galvanisch mit dem Leiternetz verbunden ist.

Der Auslösefehlerstrom ist in der Norm DIN VDE 0664 Teil 10 (= deutsche Übersetzung der Vorschrift EN 61008) definiert. Er ist der Wert des Fehlerstroms, der einen FI- oder DI-. Schutzschalter unter festgelegten Bedingungen zum Auslösen bringt. Der Auslösefehlerstrom entspricht dabei dem 0,5- bis 1-fachen des Bemessungsfehlerstroms, der ein Maß für die Auslöseempfindlichkeit des FI- oder DI-Schutzschalters ist. So kann der Bemessungsfehlerstrom beispielsweise auf 10mA oder auf 30mA festgelegt oder eingestellt sein.

Das Auslöseverhalten des Schutzschalters ist zudem üblicherweise auch auf eine bestimmte Frequenz, z.B. auf 50Hz, oder auf einen bestimmten Frequenzbereich, z.B. auf 50Hz bis 400Hz, abgestimmt. Trotz dieser Abstimmung können diese Schutzeinrichtungen dennoch auch bei höheren Frequenzen Personenschutz bieten, sofern der Auslösefehlerstrom unterhalb der vorgegebenen Grenzkurve für Herzkammerflimmern nach der Vorschrift IEC 479 liegt. Entsprechend dieser Grenzkurve darf der Auslösefehlerstrom bei 1kHz bis etwa 420mA ansteigen, um noch Personenschutz zu bieten.

Um darüber hinaus auch einen Brandschutz bei einer derartigen Schutzeinrichtung sicherzustellen, darf zur Brandvermeidung eine elektrische Leistung von maximal 100W unabhängig von der Frequenz nicht überschritten werden. Legt man eine Spannung zwischen einem Außenleiter und Erde von 230V zugrunde, ergibt zwischen einem Außenleiter und Erde von 230V zugrunde, ergibt sich ein Fehlerstrom von maximal 430mA, der zur Brandvermeidung nicht überschritten werden darf. Bei anderen Netzspannungen ergeben sich entsprechende andere Grenzwerte für den Fehlerstrom.

Problematisch bei bisherigen Schutzeinrichtungen, insbesondere bei FI-Schutzeinrichtungen, ist es jedoch, dass deren Auslösefehlerstrom mit zunehmender Frequenz stetig ansteigt und bei hohen Frequenzen, insbesondere im Kilohertz-Bereich, den für den Brandschutz maximal vertretbaren Wert von in diesem Beispiel 430mA überschreitet. Bei Anwendungsfällen in elektrischen Anlagen, in denen Frequenzumrichter und Geräte mit getakteten Stromversorgungen eingesetzt sind, können zudem im Fehlerfall auch Fehlerströme mit Fehlerstromfrequenzen bis etwa 20kHz auftreten mit der Folge, dass der Auslösefehlerstrom der Schutzeinrichtung oder des Schutzschalters in der beschriebenen Weise über den Grenzwert hinaus ansteigt und ein Brandschutz nicht mehr in allen Fällen sichergestellt ist. Durch die stark zunehmende Anzahl von Betriebsmitteln, die im Fehlerfall solche Fehlerströme mit höherer Frequenz generieren können, gewinnt dieses Problem zunehmend an Bedeutung.

Der Erfindung liegt daher die Aufgabe zugrunde, eine Fehlerstrom-Schutzeinrichtung oder einen FI-Schutzschalter derart weiterzubilden, dass er Brandvermeidung gewährleistet und ein zuverlässiger Personenschutz sichergestellt ist.

Diese Aufgabe wird erfindungsgemäß gelöst durch die Merkmale des Anspruchs 1. Dazu ist einerseits der aus nanokristallinem oder amorphem Werkstoff gebildete Wandlerkern des Summenstromwandlers zur Erfassung von nieder- und hochfrequenten Fehlerströmen ausgelegt. Weiter ist eingangsseitig ein RC-Glied parallelgeschaltet. Dieses RC-Glied ermöglicht hier Brandschutz, indem es dafür ausgelegt ist, den Auslösefehlerstrom insbesondere außerhalb einer strengeren Grenzkurve für den Personenschutz (G1) auf einen Grenzstrom zu begrenzen, der sich errechnet als Quotient aus der für den Brandschutz verlangten Leistungsgrenze in W geteilt durch die vorgesehene Netzspannung in V.

Der Wandlerkern kann weiter dafür ausgelegt sein, wechsel- und/oder pulsstromförmige Fehlerströme gemäß Typ A oder Typ AC der Vorschrift EN 61008. zu erfassen. Hierbei kann er zur Erfassung sowohl niederfxequenter Fehlerströme, insbesondere unterhalb von 1kHz, als auch hochfrequenter Fehlerströme, insbesondere ab 1kHz bis z.B. 20kHz, ausgelegt sein.

Hochfrequente Fehlerstromformen von z.B. mehreren Kilohertz werden insbesondere von einem Summenstromwandler erfasst, dessen Wandlerkern aus nanokristallinem oder amorphem Werkstoff gebildet ist. Der Einsatz von nanokristallinem Kernwerkstoff zu diesem Zweck ist z.B. aus der DE 197 02 371 A1 an sich bekannt. Ein derartiger Werkstoff ist eine schnell erstarrte weichmagnetische Legierung mit dem Vorteil eines gegenüber kristallinen weichmagnetischen Werkstoffen zweibis dreimal höheren elektrischen Widerstandes. In Verbindung mit herstellungsbedingt geringen Banddicken von typischerweise 20µm werden Wirbelstromverluste deutlich reduziert, so dass dieser amorphe oder nanokristalline Werkstoff insbesondere für den hochfrequenten Bereich vorteilhaft ist.

Die Erfindung geht dabei von der Überlegung aus, dass bei einer derartigen Fehlerstrom-Schutzeinrichtung auch in einem großen Frequenzbereich von z.B. 50Hz bis 20kHz sowohl ein Brandschutz sichergestellt ist, wenn der Auslöscfehlerstrom unterhalb der z.B. 430mA bei 100W und 230V liegt, als auch gleichzeitig ein Personenschutz gegeben ist, wenn der Auslösefehlerstrom stets unterhalb der Grenzkurve für Herzkammerflimmern gemäß IEC 479 liegt. Bei einer Frequenz von 1kHz erreicht die Grenzkurve für Herzkammerflimmern den Wert von 420mA und damit praktisch den Grenzwert für Brandschutz.

Dies wird in besonders einfacher und zuverlässiger Weise erreicht, wenn die Kapazität des Kondensators des dem Eingang der Auslöseschaltung parallelgeschalteten RC-Glieds derart bemessen ist, dass wechselstromförmige Fehlerströme mit zunehmender Frequenz gerade derart steil ansteigende Auslösefehlerströme erzeugen, dass sie noch mit ausreichendem Sicherheitsabstand unterhalb der Grenzkurve für Herzkammerflimmern liegen.

Zudem ist der Wert des Widerstandes des RC-Gliedes derart bemessen, dass dieser Widerstand den Auslösefehlerstrom bei hohen Frequenzen bis ca. 20kHz auf einen bestimmten Wert begrenzt. Dieser Widerstand stellt dann nämlich eine definierte, frequenzunabhängige Bürde für den Summenstromwandler dar, während gleichzeitig der kapazitive Widerstand des Kondensators gegen Null geht. Der Widerstand wird daher vorzugsweise derart gewählt, dass auch bei höheren Frequenzen der für den Brandschutz maximal vertretbare Auslösefehlerstrom, z.B. 430mA bei 100W/230V, nicht überschritten wird.

Die mit der Erfindung erzielten Vorteile bestehen insbesondere darin, dass durch Einsatz von amorphem oder nanokristallinem Werkstoff für den Kern des Summenstromwandlers bei gleichzeitiger Schaltung eines RC-Gliedes parallel zum Eingang der Auslöseschaltung des Auslösekreises mit nur einem einzigen Fehlerstrom-Erfassungssystem und mit nur einer einzigen Sekundärwicklung ein Personenschutz und gleichzeitig ein zuverlässiger Brandschutz auch bei Fehlerstromfrequenzen oberhalb von 1khz sichergestellt ist.

Nachfolgend wird ein Ausführungsbeispiel der Erfindung anhand einer Zeichnung näher erläutert. Darin zeigen:
- FIG 1: schematisch eine Fehlerstrom-Schutzeinrichtung mit einem ein RC-Glied zwischen einem Summenstromwandler und einer Auslöseschaltung aufweisenden Auslösekreis, und
- FIG 2: in einem logarithmisch aufgetragenen Frequenz/Auslösefehlerstrom-Diagramm eine Grenzkurve für Herzkammerflimmern gemäß IEC 479 und eine Grenzkurve zur Brandvermeidung sowie die Auslösefehlerstromkurve der Schutzeinrichtung gemäß FIG 1.

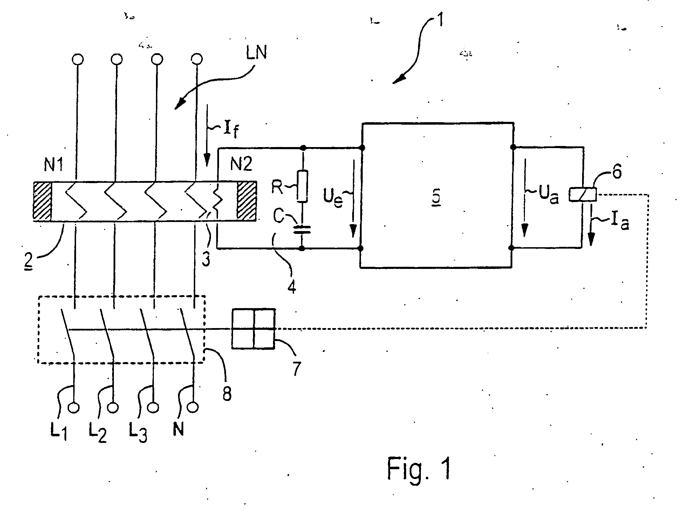

Die in FIG 1 dargestellte FI-Schutzeinrichtung 1 umfasst einen Summenstromwandler 2 mit einem aus nanokristallinem oder amorphem Werkstoff bestehenden Wandlerkern 3, durch welchen die drei Phasen Lᵢ, mit i = 1,2,3, sowie der Neutralleiter N eines 4-Leiternetzes LN geführt sind. Der FI-Schutzschalter 1 ist dabei einem (nicht dargestellten) elektrischen Verbraucher vorgeschaltet, welcher aus dem Leiternetz LN mit Strom versorgt wird. Der Wandlerkern 3 ist des Weiteren mit einer Primärwicklung N1 und mit einer Sekundärwicklung N2 versehen, welche in einem Auslösekreis 4 mit einer Auslöseschaltung 5 verbunden ist. Die FI-Schutzeinrichtung ist z.B. für einen Bemessungsfehlerstrom von 30mA ausgelegt.

Im störungsfreien Betrieb des Leiternetzes LN und des Verbrauchers ist die vektorielle Summe der durch den Wandlerkern 3 fließenden Ströme stets Null. Eine Störung tritt dann auf, wenn z.B. infolge eines Isolationsfehlers ein Teil des zugeführten Stroms verbraucherseitig über Erde abgeführt wird als sogenannter Fehler- oder Differenzstrom I_{f}. In diesem Fall ergibt die vektorielle Summe der durch den Wandlerkern 3 fließenden Ströme einen von Null verschiedenen Betrag. Dieser Differenz- oder Fehlerstrom I_{f} induziert in der Sekundärwicklung N2 ein als Maß für den Fehlerstrom I_{f} dienendes Spannungssignal Uₑ, welches der Auslöseschaltung 5 eingangsseitig zugeführt wird. Diese wandelt die Eingangsspannung Uₑ in eine Auslösespannung Uₐ und einen entsprechenden, durch ein Auslöserelais 6 geführten Strom Iₐ um.

Überschreitet der Fehlerstrom I_{f} einen in der Auslöseschaltung 5 und/oder im Auslöserelais 6 eingestellten Sollwert, so wird das mit der Auslöseschaltung 5 ausgangsseitig verbundene Auslöserelais 6, dessen Relaisspule z.B. als Haltespule ausgeführt ist, ausgelöst. Dadurch öffnet eine mit dem Auslöserelais 6 gekoppelte Schaltmechanik 7 die Schaltkontakte eines Schalters 8, der auf alle Leiter Lᵢ, N des Leiternetzes LN wirkt.

Die Auslöseschaltung 5 ist dabei entweder nur für die Erfassung von sinusförmigen Wechselfehlerströmen nach Typ AC gemäß EN 61008 ausgelegt oder derart dimensioniert, dass die Auslösebedingungen gemäß Typ A der Norm EN 61008 für pulsstromsensitive FI-Schutzschalter erfüllt werden. Zur Erfüllung einer hohen Stoßstromfestigkeit und einer hohen Fehlauslösefestigkeit auch bei transienten, d.h. nicht-periodischen impulsartigen Fehlerströmen im höheren Frequenzbereich ist die Auslöseschaltung 5 vorzugsweise in nicht näher dargestellter Art und Weise kurzzeitverzögert.

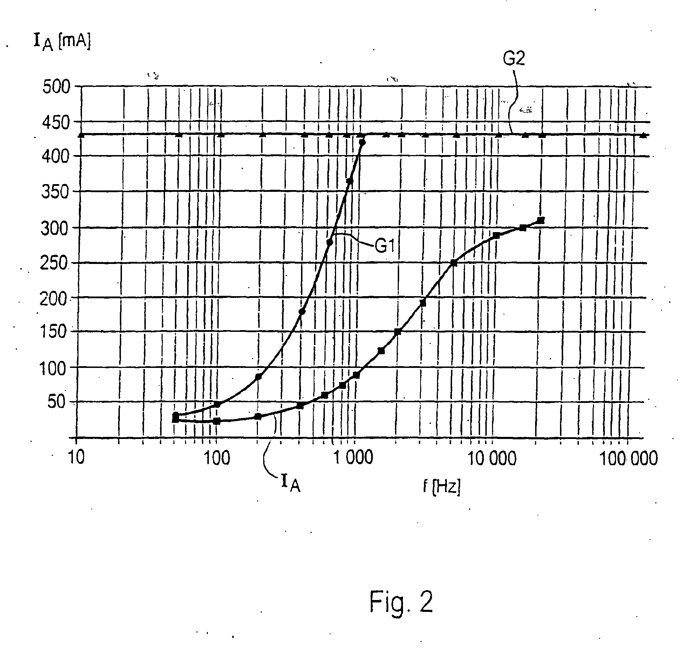

Ein der Auslöseschaltung 5 eingangsseitig parallelgeschaltetes RC-Glied ist vorzugsweise durch eine Reihenschaltung aus einem Widerstand R und einem Kondensator C gebildet. Das RC-Glied ist somit auch der Sekundärwicklung N2 des Summenstromwandlers 2 parallel geschaltet. Das RC-Glied ist derart abgestimmt, dass der Auslösefehlerstrom I_{A} mit zunehmender Frequenz f des sinusförmigen Fehlerstrom I_{f} nur derart steil ansteigt, dass der Auslösefehlerstrom I_{A} noch mit ausreichendem Sicherheitsabstand unterhalb der in FIG 2 dargestellten Grenzkurve G1 für Herzkammerflimmern gemäß der Norm IEC 479 liegt. Je größer dabei die Kapazität des Kondensators C ist, desto steiler steigt der Auslösefehlerstrom I_{A} mit der Fehlerstromfrequenz f an.

Ein derartig mit zunehmender Fehlerstromfrequenz f ansteigender Auslösefehlerstrom-Verlauf ist besonders vorteilhaft, weil dann die FI-Schutzeinrichtung 1 bei Auftreten von Fehlerströmen I_{f} im höheren Frequenzbereich, wie sie im Leiternetz LN bei bestimmten Betriebsmitteln oder Anlagenteilen auftreten können, besonders unempfindlich ist. Damit zudem bei höheren Fehlerstromfrequenzen f der Auslösefehlerstrom I_{A} den für den Brandschutz maximal vertretbaren Wert, z.B. 430mA bei 100W/230V, gemäß der Grenzkurve G2 nach FIG 2 nicht überschreitet, ist der Widerstand R in Reihe zur Kapazität C geschaltet. Der Widerstand R begrenzt dabei den Anstieg des Auslösefehlerstroms I_{A} auf einen bestimmten Wert, nämlich auf einen Wert unterhalb.der Grenzkurve G2 (hier unterhalb von 430mA), da bei hohen Fehlerstromfrequenzen f der Widerstand R eine definierte, frequenzunabhängige Bürde für den Summenstromwandler 2 darstellt, während der kapazitive Widerstand des Kondensators C gegen Null geht.

Um dabei den frequenzabhängigen Auslösefehlerstrom-Verlauf I_{A}(f) mit dem RC-Glied R,C definiert einstellen zu können und somit den Frequenzgang nicht negativ zu beeinflussen, sollte die Auslöseschaltung 5 eingangsseitig keine parallelliegenden Kapazitäten aufweisen.

Die dargestellte und beschriebene Schutzeinrichtung kann auch bei einer mit einer Mittelanzapfung der Sekundärwicklung N2 arbeitenden Auslöseschaltung 5 eingesetzt werden. Das Ziel, den Auslösefehlerstrom I_{A} einerseits zumindest bis zu einer Fehlerstromfrequenz f von 1kHz unterhalb der Grenzkurve G1 für Herzkammerflimmern nach IEC 479 und andererseits gleichzeitig ab 1kHz unterhalb der Grenzkurve G2 für eine Brandvermeidung (430mA bei 230V) zu halten, wird durch die Reihenschaltung des RC-Gliedes parallel zum Eingang der Auslöseschaltung 5 mit nur einem Fehlerstrom-Erfassungssystem und mit nur einer Sekundärwicklung N2 in fertigungs- und auslegungstechnisch besonders einfacher Weise erreicht.

## Patentansprüche

1. Fehlerstrom-Schutzeinrichtung (1) mit einem Summenstromwandler (2) sowie mit in einem Auslösekreis (4) einer Auslöseschaltung (5) und einem Auslöserelais (6) zur Betätigung einer ein Leiternetz (LN) schaltenden Schaltmechanik (7), wobei der Wandlerkern (3) des Summenstromwandlers (2) zur Erfassung nieder- und hochfrequenter Fehlerströme (I_{f}) aus nanokristallinem oder amorphem Werkstoff gebildet ist,
**dadurch gekennzeichnet,**
- **dass** der mit einer einzigen Sekundärwicklung (N2) des Summenstromwandlers (2) verbundenen Auslöseschaltung (5) eingangsseitig ein durch eine Reihenschaltung aus einem Widerstand (R) und einem Kondensator (C) gebildetes RC-Glied (R,C) parallelgeschaltet ist,
- **dass** die Kapazität des Kondensators (C) derart bemessen ist, dass der Auslösefehlerstrom (I_{A}) zumindest bis zu einer Fehlerstromfrequenz (f) von 1 kHz unterhalb einer vorgegebenen Grenzkurve (G1) für Herzkammerflimmern gemäß der Vorschrift IEC 479 liegt, und
- **dass** der Wert des Widerstandes (R) derart bemessen ist, dass der Auslösefehlerstrom (I_{A}) auch bei hohen Fehlerstromfrequenzen (f) bis ca. 20 kHz unterhalb einer zur Brandvermeidung zulässigen Grenzkurve (G2) liegt.

2. Fehlerstrom-Schutzeinrichtung nach Anspruch 1,
**dadurch gekennzeichnet, dass** der Wandlerkern (3) zur Erfassung wechsel- und/oder pulsförmiger Fehlerströme (I_{f}) gemäß Typ A bzw. Typ AC der Vorschrift EN 61008 ausgelegt ist.

## Claims

1. Device (1) for protecting against fault currents, having a total current converter (2) and a triggering arrangement (5) and a triggering relay (6) in a triggering circuit (4), for the purpose of activating a switching mechanism (7) which switches a conductor network (LN), the converter core (3) of the total current converter (2) for sensing low-frequency and highfrequency fault currents (I_{f}) being formed from nanocrystalline or amorphous material, **characterized**
- **in that** an RC element (R, C) which is formed by a series arrangement of a resistor (R) and a capacitor (C) is connected in parallel at the input end to a triggering arrangement (5) which is connected to a single secondary winding (N2) of the total current converter (2),
- **in that** the capacitance of the capacitor (C) is dimensioned such that the triggering fault current (I_{A}) lies at least up to a fault current frequency (f) of 1kHz below a predefined limiting curve (G1) for ventricular fibrillation in accordance with Rule IEC 479, and
- **in that** the value of the resistor (R) is dimensioned such that, even at high fault current frequencies (f) of up to approximately 20 kHz, the triggering fault current (I_{A}) lies below a limiting curve (G2) which is acceptable for avoiding fires.

2. Device for protecting against fault currents according to Claim 1, **characterized in that** the converter core (3) is configured for sensing alternating and/or pulse-shaped fault currents (I_{f}) according to type A or type AC of the Rule EN 61008.

## Revendications

1. Dispositif de protection contre les courants de défaut (1) ayant un transformateur de courant cumulé (2) ainsi qu'avec un montage de déclenchement (5) dans un circuit de déclenchement (4) et ayant un relais de déclenchement (6) pour l'actionnement d'un mécanisme de commutation (7) commutant un réseau à conducteurs (LN), le noyau (3) du transformateur de courant cumulé (2) étant formé en un matériau nanocristallin ou amorphe pour la détection de courants de défaut à basse fréquence et à haute fréquence (I_{f}),
**caractérisé par le fait que**
- un élément RC (R, C) formé par un montage en série d'une résistance (R) et d'un condensateur (C) est branché en parallèle avec le montage de déclenchement (5) relié à un unique enroulement secondaire (N2) du transformateur de courant cumulé (2),
- la capacité du condensateur (C) est dimensionnée de telle sorte que le courant de défaut de déclenchement (I_{A}) se trouve, au moins jusqu'à une fréquence de courant de défaut (f) de 1 kHz, en dessous d'une courbe limite prédéterminée (G1) pour des fibrillations ventriculaires selon la norme IEC 479, et
- la valeur de la résistance (R) est dimensionnée de telle sorte que le courant de défaut de déclenchement (I_{A}) se trouve, même pour des fréquences de courant de défaut (f) élevées allant jusqu'à 20 kHz environ, en dessous d'une courbe limite (G2) autorisée pour la protection contre les incendies.

2. Dispositif de protection contre les courants de défaut selon la revendication 1,
**caractérisé par le fait que** le noyau de transformateur (3) est conçu pour détecter des courants de défaut alternatifs et/ou pulsés (I_{f}) selon le type A ou le type AC de la norme EN 61008.
